Europäisches Patentamt

European Patent Office

Office européen des brevets

(19)

(11) Veröffentlichungsnummer: **0 051 245**
**B1**

(12) # EUROPÄISCHE PATENTSCHRIFT

(45) Veröffentlichungstag der Patentschrift:
01.08.84

(51) Int. Cl.³: **B 29 D 3/02**

(21) Anmeldenummer: 81108952.3

(22) Anmeldetag: 27.10.81

(54) Verfahren zur Herstellung faser-verstärkter Kunststoff-Formteile.

(30) Priorität: 31.10.80 DE 3041021

(43) Veröffentlichungstag der Anmeldung:
12.05.82 Patentblatt 82/19

(45) Bekanntmachung des Hinweises auf die Patenterteilung:
01.08.84 Patentblatt 84/31

(84) Benannte Vertragsstaaten:
AT BE CH DE FR GB IT LI LU NL SE

(56) Entgegenhaltungen:
DE - A - 2 016 479
DE - A - 2 622 163
FR - A - 2 221 930
FR - A - 2 408 448
GB - A - 871 117
US - A - 4 022 864
US - A - 4 169 186

(73) Patentinhaber: **Rudolf, A., Biebelshofer Weg 2,
D-5521 Hermesdorf/Waldbröl (DE)**

(72) Erfinder: **Rudolf, A., Biebelshofer Weg 2,
D-5521 Hermesdorf/Waldbröl (DE)**

(74) Vertreter: **Rieder, Hans-Joachim, Dr. et al,
Corneliusstrasse 45 Postfach 11 04 51,
D-5600 Wuppertal 11 (DE)**

**Beschreibung**

Die Erfindung betrifft ein Verfahren zur Herstellung faser-verstärkter Kunststoff-Formteile gemäss dem ersten Teil des Anspruchs 1. Ein derartiges Verfahren ist durch die FR-A-2 408 448 bekannt. Ausgehend hiervon hat man sich die Aufgabe gestellt, ein gattungsgemässes Kunststoff-Formteil so auszubilden, dass unter Verzicht auf eine Werkstoff-Verschiedenheit bezüglich des Innenkörpers die Gesamtfestigkeit des Formteiles erheblich erhöht werden kann.

Gelöst ist diese Aufgabe durch die im Anspruch 1 angegebene Erfindung. Die Unteransprüche stellen vorteilhafte Weiterbildungen der Erfindung dar.

Zufolge dieser Ausgestaltung ist ein faser-verstärktes Kunststoff-Formteil geschaffen, dessen Festigkeitseigenschaften ausserordentlich gesteigert werden können, ohne dass beispielsweise Innenkörper auftreten, die von ihrem Material her und damit von ihren physikalischen Materialkonstanten her Fremdkörper darstellen würden. Die Innenkörper geben dem Formteil wegen der entsprechend eingebetteten Längsfasern, bei denen es sich um Materialien höchster Zugfestigkeit handelt, wie beispielsweise Glasfaserstränge oder Kunststoffaserstränge, eine in dieser Richtung liegende optimale Festigkeit und damit beispielsweise auch ein optimales Biegeverhalten. Der Kunststoff-Mantel, welcher den mehrachsig belastbaren Faserverbund, beispielsweise in Form von Glasfasermatten enthält, bringt andererseits die notwendige Festigkeit quer zum Längsverlauf der Längsfasern. Es besteht nicht die Gefahr, dass der Innenkörper aufspleisst. Entsprechende Formteile können ohne weiteres mit Bohrungen zum Einbringen von Befestigungsschrauben oder dergleichen ausgestattet werden. Auch werden Verwindungen schadfrei aufgenommen; die Materialhomogenität vermeidet ungünstige, die Festigkeit herabsetzende und bei Dauerbeanspruchungen eventuell aufklaffende Grenzschichten zwischen Innenkörper und Mantel. Der Einsatz zusammengepresster Fasermatten im Bereich der Mantelschicht bringt eine erhebliche Erhöhung des Volumenanteiles an Fasermattenmaterial in dieser Mantelschicht, was nicht nur die Stabilität dieses mehrachsig belastbaren Faserverbundes optimiert, sondern vielmehr auch zu dem erheblichen Vorteil führt, dass, je nach gewähltem Kunststoffmaterial, der diesem innenwohnende Schrumpfungsfaktor auf ein Minimum reduziert ist. Die Anordnung mehrerer, je durch eine Mantelschicht getrennter Innenkörper gestattet die Abstimmung an maximal erreichbare Festigkeiten des gesamten Formteiles.

Die Verfahrensmassnahme, die die Längsfasern verkörpernden Rovings zunächst durch eine Vakuumkammer zu führen, dann entsprechend in einem Flüssigharzbad zu tränken, um sie daran anschliessend in dem Ausformwerkzeug zum Innenkörper zu gestalten, gewährleistet Innenkörper mit möglichst grossem Volumenanteil an Längsfasern und vor allem ohne jegliche Fremdeinschlüsse, wie beispielsweise Lufteinschlüsse. Zufolge des nun anschliessenden Verfahrensschrittes, diesen Innenkörper mit vorher zusammengepressten und in gepresstem Zustand stabilisierten Fasermatten zu umgeben und diese Mantelschicht mit ihrem aushärtenden Kunststoffanteil in einer Form zu erzeugen, die in einer Unterdruckkammer steht, ist gewährleistet, dass bei ebenfalls hohem Faseranteil im Bereich der Mantelschicht auch dort, insbesondere wegen des sich in die Form einsaugenden Flüssigharzes, eine von jeglichen Fremdeinschlüssen freie Mantelschichtstruktur realisiert. Der weiterhin gemäss der Erfindung vorgeschlagene Verfahrensschritt, den mehrachsig belastbaren Faserverbund der Kunststoff-Mantelschicht dadurch herzustellen, dass zunächst formangepasste Vorformlinge erzeugt werden dadurch, dass man die Faserbindepunkte einer normalen Fasermatte erweicht, diese in die angepasste Gestalt presst und entsprechend stabilisiert, bringt eine günstige Methode zur Erzielung von bestens angepassten Vorformlingen für die Mantelschicht mit optimalem Volumenanteil an Fasermattenmaterial, selbst bei komplizierten Gestaltungen des gesamten Formteiles, wobei der prozentual hohe Volumenanteil sogar bis in alle Inneneckenbereiche des Formteiles aufrechterhalten werden kann.

Weitere Einzelheiten der Erfindung ergeben sich anhand der nachstehenden Beschreibung mehrerer Ausführungsbeispiele gemäss Zeichnung.

Es zeigt:

Fig. 1 einen perspektivischen Abschnitt des Kunststoff-Formteiles, teilweise aufgebrochen,

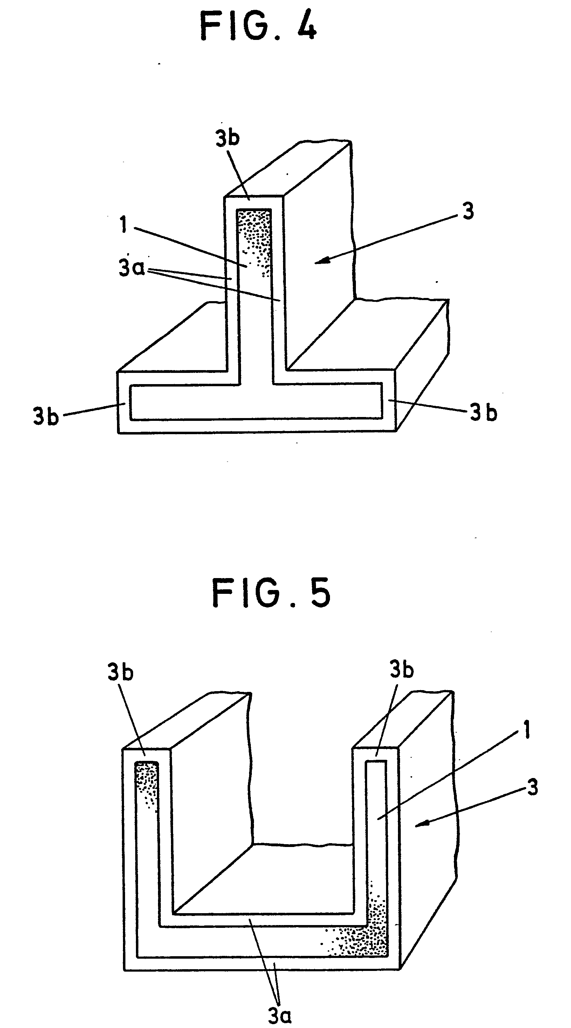

Fig. 2 bis 5 gleiche Darstellungen solcher Kunststoff-Formteile in anderer Querschnittsgestalt.

Das Kunststoff-Formteil besteht aus einem oder mehreren vorgefertigen Innenkörper 1, die aus mit Längsfasern 2 verstärktem Kunststoff gebildet sind und einer Mantelschicht 3, welche den oder die Innenkörper 1 vorzugsweise allseitig umgibt. Die Mantelschicht 3 besteht aus Kunststoffmaterial mit mehrachsig belastbarem Faserverbund, also beispielsweise Fasermatten, einem Vlies oder dergleichen.

Die Vorfertigung des Innenkörpers 1 geschieht derart, dass die aus Strängen von Längsfasern 2 gebildeten Rovings vor dem Einlauf in ein Harz-Tränkbad durch eine Vakuumkammer geführt werden und, durch Düsen hindurchtretend, unterhalb der Badoberfläche in das Flüssigkarz eintreten. Die Benetzung der Elementarfäden ist deshalb im Strang vollkommen. Die getränkten Stränge werden nebeneinander und übereinander in ein Ausformwerkzeug beliebiger Länge gelegt, durch einen beweglichen Ausformwerkzeug-Deckel auf Mass unter geringem Druck nachgepresst. Die vollkommene Tränkung und die strenge Längsorientierung der aus hoch zugfestem Material bestehenden Längsfasern 2 lässt sowohl die extremen Festigkeitswerte erreichen, als auch eine hohe Qaulitätskonstanz. Die Abweichungen liegen in der Grösse von plus minus 2 bis 3%. Die Herstellungstechnik gestattet Querschnitte von 20 bis 40 Quadratzentimetern und darüber, ist weitgehend automatisierbar und damit aussergewöhnlich wirtschaftlich.

Die Mantelschicht 3 enthält im Gegensatz zu der nur in Längsrichtung orientierten Stabilisierung des Innenkörpers 1 einen mehrachsig belastbaren Faserverbund, aufgebaut aus zusammengepressten und im gepressten Zustand stabilisierten Glasmatten. Zur Erzielung hoher Fasergehalte im Laminat, etwa im Bereich um 60 bis 70%, werden die Matten stark komprimiert. Um dieses zu erreichen, werden einzelne, normale, lockere Fasermatten aufeinandergestapelt. Durch Aufsprühen eines organischen Lösungsmittels oder beispielsweise durch einen Heissluftstrom, oder beispielsweise durch beides zusammen, werden die Faserbindepunkte vorübergehend aufgeweicht. Anschliessend erfolgt die Pressung der Matten in eine dem Formteil bzw. dem Formteilabschnitt angepasste Gestalt. Die Gestalt wird dadurch stabilisiert, dass der Pressdruck aufrechterhalten wird bis zur erneuten Härtung der Faserbindepunkte, beschleunigt beispielsweise dadurch, dass das zugebrachte Lösungsmittel durch einen Warmluftstrom verdampft wird. Die notwendige Lagenzahl der zusammenzupressenden Ausgangs-Fasermatten lässt sich dabei leicht vorausberechnen. Die notwendigen Kräfte sind sehr gering und betragen nur Bruchteile von einem Kilogramm pro Quadratzentimeter. Vorformdicken von 1 bis 50 mm sind ohne Schwierigkeiten erreichbar und entsprechen je nach Fasergehalt einer Lagenzahl von 2 bis 3 bzw. 120 bis 150. Die Festigkeit und Masskonstanz ist sehr hoch. Sollen Ist-Werte mit sehr grosser Genauigkeit erzielt werden, so wird das Mattenpaket einfach vorher abgewogen. Durch leichtere und schwerere Zuschnitte ist auf diese Weise jede beliebige Genauigkeit erreichbar. Die entsprechenden, dem Formteilabschnitt angepassten Vorformlinge werden dann in den Mantelbereich der Innenkörper gelegt, und zwar in eine Form. Diese wird in eine Unterdruckkammer gestellt. Im Zustand des Unterdruckes erfolgt das Füllen der Form mit Flüssigkharz, und zwar durch Einsaugen des Flüssigharzes in das Forminnere. Günstigerweise wird hierbei das Flüssigharz vor dem Einsaugen in die Form bis auf wenige Millibar entlüftet, dies um insbesondere zu vermeiden, dass durch das Flüssigharz selbst wieder Fremd-Einschlüsse oder dergleichen in das Material eingebracht werden.

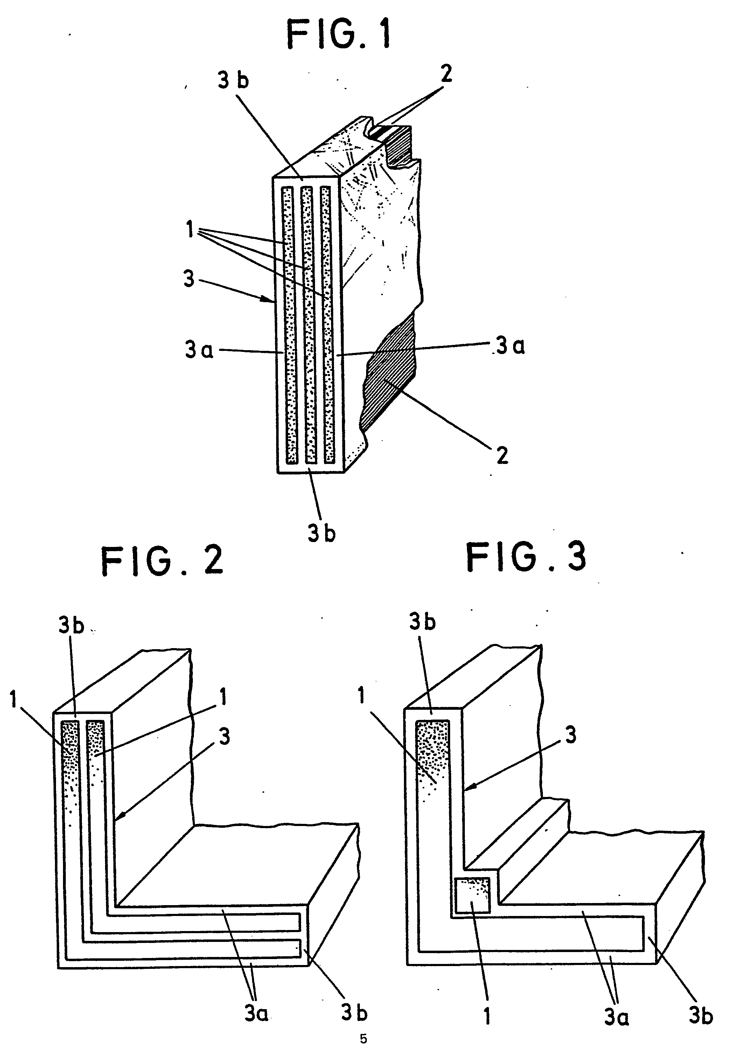

Beim Kunststoff-Formteil gemäss Fig. 1 sind drei vorgefertigte Innenkörper 1 leistenförmiger Gestalt parallel nebeneinander angeordnet, und zwar jeweils unter Zwischenlage einer Mantelschicht 3. Diese ist erzeugt durch Verwendung von zusammengepressten plattenförmigen, leistenförmigen Vorformlingen, etwa derselben Gestalt wie die Innenkörper 1. Zusätzlich sind im Bereich der flächengrössere Abschnitte bildenden aussenliegenden Mantelschichten 3a gleichgestaltete Vorformlinge vorhanden. Zur Erzielung einer vollkommenen Querschnittssummantelung der den Profilkern darstellenden Innenkörper 1 sind dann noch flächenkleinere, d.h. schmalere Mantelschichten 3b vorgesehen, welche aus ebenfalls gestalt-angepassten Vorformlingen aus mehrachsig belastbarem Faserverbund komprimierter Struktur bestehen. Die zwischengelegten Mantelschichten 3 sind von Mantelschicht 3b zu Mantelschicht 3b reichende Materialbrücken.

Alle in der Beschreibung erwähnten und in der Zeichnung dargestellten neuen Merkmale sind erfindungswesentlich, auch soweit sie in den Ansprüchen nicht ausdrücklich beansprucht sind.

## Patentansprüche

1. Verfahren zur Herstellung faser-verstärkter Kunststoff-Formteile mit vorgefertigtem Innenkörper (1), welcher einen Kunststoff-Mantel (3) mit mehrachsig belastbarem Faserverbund besitzt, wobei der vorgefertigte Innenkörper aus mit Längsfasern verstärktem Kunststoff besteht, wobei der Faser-Volumenanteil des Innenkörpers grösser ist als in der Mantelschicht, dadurch gekennzeichnet, dass zunächst etwa der Länge des Formteiles entsprechende Innenkörper dadurch hergestellt werden, dass durch eine Vakuumkammer geführte Rovings durch Düsen in ein Flüssigharz-Tränkbad geführt, die so getränkten Stränge in paralleler Lage in ein Ausformwerkzeug gelegt, durch den Ausformwerkzeug-Deckel leicht zusammengepresst und bis zur Aushärtung des Harzes im Ausformwerkzeug belassen werden, woran anschliessend diese Innenkörper aus ihrem Ausformwerkzeug entnommen und in einfacher oder mehrzahliger Anordnung in eine der Gestalt des Formteiles angepasste Form gelegt, anschliessend das verbleibende Restvolumen der Form mit die Innenkörper umgebenden, vorher zusammengepressten und in gepresstem Zustand stabilisierten Fasermatten ausgefüllt wird, wonach die Form in eine Unterdruckkammer verbracht wird, in welchem Zustand das Füllen der Form mit Flüssigharz erfolgt durch Einsaugen des Flüssigharzes in das Forminnere, wobei die in gepresstem Zustand stabilisierte Fasermatte dadurch erzeugt ist, dass einzelne, entsprechen geformte Mattenzuschnitte in eine Pressform aufeinandergelegt, die Faserbindepunkte erweicht, der vollständige Mattenzuschnitt-Stapel auf einen Bruchteil seiner Dicke gepresst wird unter Aufrechterhaltung des Pressdruckes bis zur erneuten Härtung der Faserbindepunkte.

2. Verfahren nach Anspruch 1, dadurch gekennzeichnet, dass die Faserbindepunkte mittels eines eingesprühten, verdampfungsfähigen Lösungsmittels erweicht werden.

3. Verfahren nach Anspruch 2, dadurch gekennzeichnet, dass die Verdampfung des Lösungsmittels durch einen den Pressstapel durchdringenden Warmluftstrom beschleunigt wird.

## Claims

1. Process for the preparation of fibre-reinforced plastic mouldings having a prefabricated inner body (1) possessing a plastic cover (3) with a multiaxially stressable fibre composite, the prefabricated inner body consisting of plastic reinforced with fibres running in the lengthwise direction and the proportion by volume of fibres in the inner body being greater than in the cover layer, characterised in that inner bodies which initially correspond roughly to the length of the moulding are produced by passing rovings, led through a vacuum chamber, through nozzles into a liquid resin impregnating bath, laying the thus impregnated strands parallel in a moulding tool, compressing them lightly by means of the top of the moulding tool and leaving them in the moulding tool until the resin has hardened, that thereafter these inner bodies are taken from their moulding tool and laid, arranged singly or in a plurality, in a mould adapted to the shape of the moulding, and the remaining residual volume of the mould is then filled with fibre mats which surround the inner bodies, the said mats having beforehand been compressed and stabilised in the pressed state, and that thereupon the mould is introduced into a reduced-pressure chamber in which condition the filling of the mould with liquid resin is effected by sucking the liquid resin into the interior of the mould, the fibre mat stabilised in the pressed state having been produced by stacking individual appropriately shaped cut pieces of mat in a press mould, stoftening the fibre-bonding points, pressing the complete stack of cut pieces of mat to a fraction of its thickness and maintaining the pressure of the press until the fibre-bonding points have again hardened.

2. Process according to claim 1, characterised in that the fibre-bonding points are softened by means of a sprayed-in, vaporisable solvent.

3. Process according to claim 2, characterised in that the vaporisation of the solvent is accelerated by a stream of warm air which passes through the press stack.

**Revendications**

1. Procédé de fabrication d'éléments préformés en matière synthétique renforcés par des fibres, comportant un corps intérieur (1) préfabriqué qui est pourvu d'une enveloppe (3) en matière synthétique avec assemblage de fibres à capacité de charge multiaxiale, le corps intérieur préfabriqué étant constitué en matière synthétique renforcée par des fibres longitudinales, la proportion en volume de fibres du corps intérieur étant plus grande que dans la couche-enveloppe, caractérisé en ce que d'abord sont fabriqués des corps intérieurs, correspondant à peu près à la longueur de l'élément préformé, en amenant des «rovings» préalablement passés par une chambre à vide, au moyen de buses, dans un bain d'imprégnation de résine liquide, en plaçant les fils continus de fibres ainsi imprégnés en couches parallèles dans un outil de formage, en les pressant légèrement les uns contre les autres par le couvercle de l'outil de formage et en les laissant dans celui-ci jusqu'au durcissement de la résine, à la suite de quoi, ces corps intérieurs sont enlevés de leur outil de formage et placés, en une disposition simple ou multiple, dans un moule adapté à la conformation de l'élément préformé, ensuite le volume restant demeurant libre dans le moule est rempli de nattes de fibres qui entourent les corps intérieurs en étant auparavant pressées les unes contre les autres et stabilisées à l'état pressé, puis le moule est placé dans une chambre à dépression, situation dans laquelle le remplissage du moule avec de la résine liquide est effectué par aspiration de la résine liquide à l'intérieur du moule, la natte de fibres stabilisée à l'état pressé étant obtenue en plaçant les unes sur les autres dans un moule à compression des découpes individuelles de nattes formées de façon appropriée, en ramollissant les points de liage des fibres, en pressant la pile complète de découpes de nattes à une fraction de son épaisseur et en maintenant la pression de pressage jusqu'à redurcissement des points de liage des fibres.

2. Procédé selon la revendication 1, caractérisé en ce que les points de liage des fibres sont ramollis au moyen d'un solvant introduit par aspersion et capable d'être évaporé.

3. Procédé selon la revendication 2, caractérisé en ce que l'évaporation du solvant est accélérée sous l'effet d'un courant d'air chaud traversant la pile sous compression.

# FIG. 1

# FIG. 2

# FIG. 3

# FIG. 4

# FIG. 5